(19) Europäisches Patentamt
European Patent Office
Office européen des brevets

(11) **EP 2 433 177 B1**

(12) **FASCICULE DE BREVET EUROPEEN**

(45) Date de publication et mention
de la délivrance du brevet:
**12.07.2017 Bulletin 2017/28**

(21) Numéro de dépôt: **10731771.1**

(22) Date de dépôt: **20.05.2010**

(51) Int Cl.:
**G02C 7/02** *(2006.01)*     **G02C 7/06** *(2006.01)*

(86) Numéro de dépôt international:
**PCT/FR2010/050987**

(87) Numéro de publication internationale:
**WO 2010/133813 (25.11.2010 Gazette 2010/47)**

(54) **METHODE DE CALCUL DE LENTILLE OPHTALMIQUE DE TYPE UNIFOCALE**

BERECHNUNGSMETHODE EINER OPHTHALMISCHEN LINSE VON DER UNIFOCALEN ART

METHOD OF CALCULATION OF AN OPHTHAMLIC LENS OF THE UNIFOCAL TYPE

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **20.05.2009 FR 0953395**

(43) Date de publication de la demande:
**28.03.2012 Bulletin 2012/13**

(73) Titulaire: **Essilor International
(Compagnie Générale d'Optique)
94220 Charenton-le-Pont (FR)**

(72) Inventeurs:
• **CALIXTE, Laurent
F-94220 Charenton-le-Pont (FR)**
• **GUILLOUX, Cyril
F-94220 Charenton-le-Pont (FR)**
• **POULAIN, Isabelle
F-94220 Charenton-le-Pont (FR)**

(74) Mandataire: **Cabinet Plasseraud
66 rue de la Chaussée d'Antin
75440 Paris Cedex 09 (FR)**

(56) Documents cités:
**EP-A1- 1 429 172       EP-A2- 1 835 328
WO-A1-00/73846       WO-A1-97/26579
WO-A1-2006/003275    WO-A1-2006/084986
WO-A1-2008/037892    DE-A1- 4 238 067
FR-A1- 2 683 642     US-A- 6 155 681
US-A1- 2004 075 803**

• **STEFANIE SCHULDT: "ysis - Natürliches sehen erleben" DEUTSCHE OPTIKER ZEITUNG, XX, DE, no. 5/2004, 1 mai 2004 (2004-05-01), pages 38-43, XP002398937**
• **ANONYMOUS: "Optique ophtalmique - Verre de lunettes semi-finis - Partie 2: Spécifications pour les verres progressifs" NORME INTERNATIONALE (ISO 10322-2 DEUXIÈME ÉDITION), 1 février 1996 (1996-02-01), pages I-8, XP002599906**

**Description**

La présente invention a pour objet une méthode de calcul d'une lentille ophtalmique de type unifocale destinée à être portée dans une monture de lunettes.

Toute lentille ophtalmique de type unifocale, destinée à être portée dans une monture de lunettes, est associée à une prescription déterminée pour une distance d'observation donnée. La prescription ophtalmique pour cette distance de vision peut comprendre une valeur de puissance, positive ou négative, ainsi qu'une valeur et un axe d'astigmatisme. Cette prescription compense le défaut visuel du porteur par l'intermédiaire de la lentille. Cette lentille est montée dans la monture en fonction de la position de la pupille du porteur par rapport à la monture, pour une distance de vision et une direction de regard données.

Dans le cas le plus simple des lentilles unifocales classiques, les faces avant et arrière de ces lentilles sont des surfaces sphériques, ou toriques si la prescription présente un astigmatisme.

Des développements ont été effectués pour améliorer la vision et augmenter le confort du porteur par rapport à des lentilles unifocales classiques.

On précise qu'une lentille selon l'invention est de « type » unifocale au sens où elle correspond à une prescription unifocale donnée, mais que cette lentille peut présenter des variations de puissance et/ou d'astigmatisme autour des valeurs prescrites.

Une première famille de lentilles ophtalmiques de type unifocale améliorées, destinées à la compensation oculaire d'un porteur, est connue sous le nom de « verres asphériques » où la qualité optique du verre est améliorée en optimisant les aberrations visuelles (par exemple les écarts de puissance et d'astigmatisme par rapport à la prescription) du verre.

Une autre famille de lentilles ophtalmiques de type unifocale améliorées, destinées à la compensation oculaire d'un porteur amétrope non-presbyte est divulguée dans le document FR 2 871 247. Les lentilles décrites sont adaptées aux porteurs amétropes non-presbytes ésophores, qui ressentent une fatigue visuelle en sollicitant de façon prolongée leur vision de près. Un porteur peut présenter une hétérophorie ou phorie, c'est-à-dire une déviation des deux axes visuels par rapport au point de fixation lorsque la vision binoculaire est dissociée. La phorie est mise en évidence par une modification des axes visuels lorsque la vision binoculaire est dissociée. Autrement dit, en position active - avec une vision binoculaire - les axes visuels se coupent au point de fixation ; en position passive, en l'absence de stimulus de fusion ou en supprimant toute stimulation fusionnelle et périphérique, les axes visuels ne passent plus par le point de fixation. Pour plus de détails sur la définition de la phorie, on peut consulter Darras C., Eléments et réflexions d'optique physiologique, Edition ERA, 1995.

Les lentilles ophtalmiques de type unifocales améliorées divulguées dans le document FR 2 871 247 s'adressent spécifiquement aux porteurs souffrant de fatigue visuelle. Les lentilles progressives avec une addition faible sont connues de US6155681 ainsi que FR2683642.

La présente invention s'adresse à tout porteur (amétrope et/ou presbyte) auquel a été prescrit un équipement unifocal.

Le but de la présente invention est de proposer à un porteur une lentille ophtalmique de type unifocale améliorée permettant d'augmenter la netteté et le confort de sa vision par rapport à une lentille unifocale ou une lentille asphérique connue.

Le parcours d'abaissement de regard est également communément appelé « méridienne ».

On entend par « la puissance de la lentille est égale à la prescription du porteur » une configuration où la puissance de la lentille est égale, aux erreurs de mesure près, à la prescription définie en mode « porteur » ou en mode « frontofocomètre » selon les techniques usuelles en optique ophtalmique.

On entend par « gradient de puissance moyenne le long du parcours d'abaissement de regard » une variation de la puissance moyenne rapportée à une variation angulaire le long du parcours d'abaissement de regard.

Les inventeurs ont pu constater qu'une telle lentille permet avantageusement de prendre en compte la dynamique accommodative de l'oeil et ainsi d'augmenter le confort visuel du porteur.

Selon différents modes de réalisation, qui peuvent être combinés entre eux selon toutes les combinaisons possibles :

- - la lentille ophtalmique est associée à des informations permettant de positionner le point de contrôle P sur ladite lentille et de repérer le haut et le bas de ladite lentille, lesdites informations étant par exemple choisies parmi un ou plusieurs éléments de la liste constituée de microgravure, traçage temporaire, carte de montage, catalogue fabricant et optionnellement des moyens de repérage du côté nasal et/ou temporal de la lentille ; par ailleurs, d'autres moyens connu d'un homme du métier permettant de fournir des informations destinées à positionner le point de contrôle P pourraient également ou alternativement être utilisés ; la valeur de maximum de variation de puissance $|\Delta Pui_{SupMax}|$ et/ou la valeur de $\Delta Pui_{InfMax}$ est supérieure ou égale à 0,15 dioptrie et inférieure ou égale à 0,30 dioptrie ;

- la valeur de maximum de variation de puissance $|\Delta Pui_{SupMax}|$, est supérieure ou égale à $0.5 \times \Delta Pui_{InfMax}$ et/ou inférieure ou égale à $2 \times \Delta Pui_{InfMax}$, par exemple supérieure ou égale à $0.75 \times \Delta Pui_{InfMax}$ et/ou par exemple inférieure ou égale $1.5 \times \Delta Pui_{InfMax}$ ;

- l'astigmatisme résultant est inférieur ou égal à $1,25 \times \Delta Pui_{total}$, exprimé en dioptrie, sur l'ensemble des zones supérieure et inférieure ; selon un exemple de réalisation l'astigmatisme résultant est inférieur ou égal à $0,9 \times \Delta Pui_{total}$, exprimé en dioptrie, pour l'ensemble des zones supérieure et inférieure ;

- le gradient de puissance moyenne le long du parcours d'abaissement du regard est inférieur ou égal à $3.10^{-2} \times \Delta Pui_{total}$, voire par exemple inférieur ou égal à $2,75.10^{-2} \times \Delta Pui_{total}$, exprimé en dioptrie par degré ;

- les valeurs de variation de puissance moyenne $\Delta Pui_{Inf}$ et $\Delta Pui_{Sup}$ sont égales en valeur absolue, et/ou en ce que les points $P_{Sup}$ et $P_{Inf}$ sont symétriques par rapport à P ;

- le parcours d'abaissement du regard est rectiligne ;

- la surface avant et/ou la surface arrière est choisie dans la liste constituée d'une surface sphérique, d'une surface asphérique, d'une surface complexe, comme par exemple une surface de type progressive, une surface résultant de la combinaison de plusieurs surfaces.

Dans le cadre de la présente invention, on entend par « angle pantoscopique » un angle dans un plan vertical formé par l'axe visuel d'un oeil en condition primaire de regard et la normale au plan tangent à la face arrière du verre au niveau de l'intersection de la direction primaire de regard avec le verre.

On entend par « position primaire » la position de l'oeil par rapport à la tête, regardant droit devant un objet situé au niveau de l'oeil.

Ces définitions sont conformes aux principes énoncés par la norme ISO 13666 (première édition 1998-08-01) portant sur le vocabulaire de l'optique ophtalmique et des verres de lunettes.

Par ailleurs, on entend par « galbe » un angle dans un plan horizontal formé par l'axe visuel d'un oeil en condition primaire de regard et la normale au plan tangent à la face arrière du verre au niveau de l'intersection de la direction primaire de regard avec le verre.

L'invention vise une méthode de calcul, mise en oeuvre par des moyens informatiques, du système optique (OS) d'une lentille ophtalmique, destinée à être portée dans une monture de lunettes, personnalisée pour un porteur donné comprenant les étapes suivantes :

- fournir la prescription du porteur ;
- définir une distance entre le centre de rotation de l'oeil (CRO) et la face arrière de la lentille ophtalmique, selon une ligne de regard $(\alpha, \beta)$ du porteur;
- définir un angle pantoscopique;
- définir un galbe ;
- définir un point P de contrôle de la prescription correspondant à un abaissement de regard $\alpha_P$ compris entre -10° et +25° et un déplacement latéral de regard $\beta_P$ compris entre -10° et +10° où la puissance du verre au point P est égale à la prescription du porteur ;
- définir une zone supérieure définie par des valeurs, $\alpha$, d'abaissement de regard du porteur comprises entre $\alpha_P$-30° et $\alpha_P$, le long d'un parcours d'abaissement de regard et par des valeurs, $\beta$, de déplacement latéral de regard du porteur comprises entre $\beta_P$-30° et $\beta_P$+30°, parallèlement à un axe de déplacement latéral du regard ;
- définir une zone inférieure définie par des valeurs, $\alpha$, d'abaissement de regard du porteur comprises entre $\alpha_P$ et $\alpha_P$+30°, le long d'un parcours d'abaissement de regard et par des valeurs, $\beta$, de déplacement latéral de regard du porteur comprises entre $\beta_P$-30° et $\beta_P$+30°, parallèlement à un axe de déplacement latéral du regard ;

et où ladite lentille ophtalmique est calculée de manière à ce que :

- la puissance du verre au point P est sensiblement égale à la prescription du porteur ;
- la zone supérieure présente, par rapport au point P, le long du parcours d'abaissement de regard, une variation continue de puissance moyenne $\Delta Pui_{Sup}$, monotone entre le point P et un point $P_{Sup}$, qui est le point de maximum d'amplitude de variation de la valeur de la puissance, en valeur absolue, et où la valeur de l'écart de puissance moyenne entre les points $P_{Sup}$ et P, $\Delta Pui_{SupMax}=Pui(P_{Sup})-Pui(P)$, est comprise entre -0, 1 et -0,4 dioptrie ;
- la zone inférieure présente, par rapport au point P, le long du parcours d'abaissement de regard, une variation continue de puissance moyenne $\Delta Pui_{Inf}$, monotone entre le point P et un point $P_{Inf}$, qui est le point de maximum d'amplitude de variation de la valeur de la puissance, en valeur absolue, et où la valeur de l'écart de puissance moyenne entre les points $P_{Inf}$ et P, $\Delta Pui_{InfMax}=Pui(P_{Inf})-Pui(P)$, est comprise entre +0,1 et +0,4 dioptrie ;

- le gradient de puissance moyenne le long du parcours d'abaissement de regard est inférieur à $4.10^{-2} \times \Delta Pui_{total}$, où $\Delta Pui_{total} = |\Delta Pui_{SupMax}| + \Delta Pui_{nfMax}$ et ledit gradient de puissance moyenne est exprimé en dioptrie par degré.

On entend par « définir » un paramètre, le fait d'introduire une valeur numérique choisie pour ce paramètre afin de procéder au calcul selon la méthode ci-dessus.

Selon un mode de réalisation, le système optique (OS) de ladite lentille est calculé par une méthode comprenant une étape d'optimisation. Il est notamment possible de définir une lentille de travail égale à une lentille de départ et une lentille cible à partir desquelles on détermine par optimisation une lentille optimisée en minimisant la différence entre des valeurs de paramètres de la lentille de travail et ceux de la lentille cible. Un exemple d'un tel mode de calcul ressort du document EP0990939. Toute autre méthode d'optimisation connue de l'homme du métier peut également être mise en oeuvre.

Selon un mode de réalisation, on considère que le porteur est un porteur de référence défini par les paramètres suivants :

- la distance entre le centre de rotation de l'oeil (CRO) et la face arrière de la lentille ophtalmique, selon une ligne de regard $(\alpha, \beta) = (0,0)$, est égale à 25,5 mm ;

- l'angle pantoscopique est de 8° ;

- le galbe est de 0°.

Selon un autre mode de réalisation la distance entre le CRO de l'oeil d'un porteur et la face arrière de la lentille ophtalmique, selon une ligne de regard $(\alpha, \beta) = (0,0)$, est mesurée pour l'oeil de ce porteur donné.

Une telle mesure peut être notamment effectuée selon la méthode décrite dans le document WO 2008/132356 ou selon celle décrite dans le document EP 1154302.

Quand la mesure s'effectue en deux étapes par la détermination de la distance face arrière de la lentille/cornée de l'oeil puis ajout de la distance cornée/CRO, on choisira par exemple une distance cornée/CRO de 13.5 mm.

Il convient de noter que toute autre méthode appropriée permettant de déterminer directement ou indirectement la distance CRO de l'oeil du porteur/face arrière de la lentille peut être également mise en oeuvre.

Par ailleurs, il est également possible de choisir un angle pantoscopique différent de 8° et un galbe différent de 0°.

L'invention porte également sur un procédé de fabrication d'une lentille ophtalmique, destinée à être portée dans une monture de lunettes, personnalisée pour un porteur donné comprenant les étapes suivantes :

- fournir le système optique (OS) d'une lentille ophtalmique personnalisée pour un porteur donné calculé selon la méthode de calcul ci dessus ;

- approvisionner un produit semi fini adapté à l'usinage d'une lentille ophtalmique ;

- usiner le produit semi fini de manière à réaliser une lentille ophtalmique ayant les caractéristiques du système optique fournis ci-dessus.

Selon un mode de réalisation, la lentille ophtalmique est associée avec des informations permettant de positionner le point de contrôle P sur ladite lentille et de repérer le haut et le bas de ladite lentille, lesdites informations étant par exemple choisie parmi un ou plusieurs éléments de la liste constituée de microgravure, traçage temporaire, carte de montage, catalogue du fabricant et optionnellement des moyens de repérage du côté nasal et/ou temporal de la lentille.

L'invention vise par ailleurs un procédé pour augmenter la netteté de la vision et le confort visuel d'un porteur amétrope non-presbyte grâce à une prise en compte de la dynamique accommodative de l'oeil où une lentille ophtalmique, destinée à être portée dans une monture de lunettes, est fournie audit porteur.

D'autres avantages et caractéristiques de l'invention apparaîtront à la lecture de la description qui suit des modes de réalisation de l'invention, donnés à titre d'exemple et en référence aux dessins qui montrent :

- figures 1 à 3, des représentations schématiques d'un système oeil - lentille ;

- figure 4, un profil de variation de puissance et d'astigmatisme le long de la méridienne de la lentille selon un premier mode de réalisation de l'invention ;

- figure 5, une carte de puissance moyenne de la lentille de la figure 4 ;

- figure 6, une carte d'astigmatisme résultant de la lentille de la figure 4 ;

- figures 7 à 9, figures 10 à 12, figures 13 à 15, figures 16 à 18, des figures similaires aux figures 4 à 6 pour une lentille selon d'autres modes de réalisation de l'invention.

On utilise dans la suite les termes de haut et bas, horizontal ou vertical par rapport au point P de la lentille, sauf mention du contraire.

De façon connue, en tout point d'une surface complexe, on définit une sphère moyenne D donnée par la formule :

$$D = \frac{n-1}{2}\left(\frac{1}{R_1} + \frac{1}{R_2}\right)$$

où $R_1$ et $R_2$ sont les rayons de courbure maximal et minimal exprimés en mètres, et n l'indice du matériau constituant la lentille.

On définit aussi un cylindre C, donné par la formule :

$$C = (n-1)\left|\frac{1}{R_1} - \frac{1}{R_2}\right| .$$

Les caractéristiques des surfaces de la lentille peuvent être exprimées à l'aide de la sphère moyenne et du cylindre.

Pour une lentille donnée, les grandeurs optiques correspondantes, à savoir une puissance et un astigmatisme sont définies.

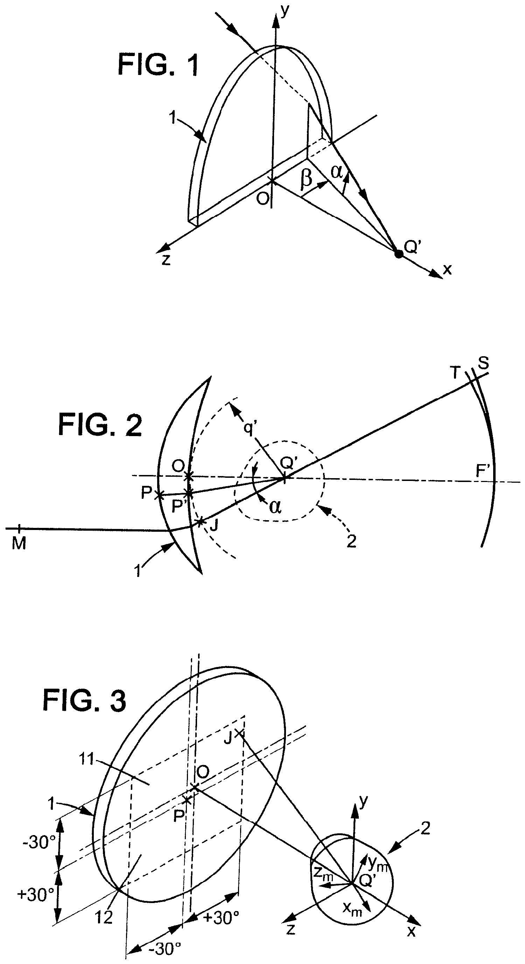

Les figures 1 à 3 montrent des schémas de systèmes optiques oeil et lentille, permettant d'illustrer les définitions utilisées dans la description.

La figure 1 représente un schéma d'une vue en perspective d'un tel système illustrant les paramètres $\alpha$ et $\beta$ utilisés pour définir une direction de regard.

La figure 2 représente une vue dans un plan vertical parallèle à un axe antéropostérieur de la tête du porteur et passant par le centre de rotation de l'oeil, dans un cas où $\beta = 0$.

La figure 3 représente une vue en perspective dans une configuration où $\alpha$ et $\beta$ sont non nuls permettant de mettre en évidence un repère {x, y, z} fixe et un repère {$x_m$, $y_m$, $z_m$} lié à l'oeil pour bien montrer la rotation de l'oeil.

On appelle Q' le centre de rotation de l'oeil; l'axe Q'F' est l'axe horizontal passant par le centre de rotation de l'oeil et s'étendant devant le porteur - autrement dit l'axe Q'F' correspond à la direction primaire du regard. Soit le point O, point d'intersection de la surface arrière de la lentille et de cet axe Q'F'. On définit une sphère des sommets, de centre Q', et de rayon q', qui est tangente à la surface arrière de la lentille en un point de l'axe horizontal. A titre d'exemple, une valeur du rayon q' de 25,5 mm correspond à une valeur courante.

Une direction donnée du regard correspond à une position de l'oeil en rotation autour de Q' et à un point J de la sphère des sommets; l'angle $\beta$ est l'angle formé entre l'axe Q'F' et la projection de la droite Q'J sur le plan horizontal contenant l'axe Q'F'. L'angle $\alpha$ est l'angle formé entre l'axe Q'J et la projection de la droite Q'J sur le plan horizontal contenant l'axe Q'F'. Une direction donnée du regard correspond donc à un point J de la sphère des sommets ou à un couple ($\alpha$, $\beta$). Plus la valeur de l'abaissement de regard est positive, plus le regard s'abaisse et quand la valeur est négative, le regard se lève. L'image d'un point de l'espace objet, dans une direction du regard, et à une distance objet donnée, se forme entre deux points S et T correspondant à des distances focales minimale et maximale, qui seraient des distances focales sagittale et tangentielle dans le cas de surfaces de révolution. Sur l'axe optique, l'image d'un point de l'espace objet à l'infini se forme au point F'.

On définit un point de contrôle P de la prescription où la puissance optique et l'astigmatisme correspondant à la prescription du porteur sont requis. Ce point de contrôle P est situé dans une zone correspondant à un abaissement de regard $\alpha_p$ compris entre -10° et +25° et un déplacement latéral de regard $\beta_p$ compris entre -10° et +10°.

On appelle ergorama une fonction associant à chaque direction du regard la distance habituelle du point objet. Typiquement, en vision de loin suivant la direction primaire du regard, le point objet est à l'infini. Pour plus de détails sur une définition possible d'un ergorama, on pourra consulter FR-A-2 753 805 (US-A-6 318 859). Ce document décrit un ergorama, sa définition et son procédé de modélisation. Un ergorama particulier consiste à ne prendre que des points à l'infini. Pour le procédé de l'invention, on peut considérer des points à l'infini ou non. L'ergorama peut aussi être fonction de l'amétropie du porteur.

A l'aide de ces éléments, on peut définir une puissance et un astigmatisme, dans chaque direction du regard. Pour une direction du regard ($\alpha$, $\beta$), on considère un point M objet à une distance objet donnée par l'ergorama. Dans l'espace objet, on définit, pour le point M sur le rayon lumineux correspondant, une proximité objet ProxO comme l'inverse de la distance MJ entre le point M et le point J de la sphère des sommets:

$$\text{ProxO = 1/MJ}$$

Ceci permet un calcul de la proximité objet dans le cadre d'une approximation lentille mince en tout point de la sphère des sommets. Pour une lentille réelle, on peut à l'aide d'un programme de tracé de rayons considérer la proximité objet comme l'inverse de la distance entre le point objet et la surface avant de la lentille, sur le rayon correspondant.

Toujours pour la même direction du regard ($\alpha$, $\beta$), l'image d'un point M ayant une proximité objet donnée se forme entre deux points S et T correspondant respectivement à des distances focales minimale et maximale (qui seraient des distances focales sagittale et tangentielle dans le cas de surfaces de révolution). On appelle proximité image, ProxI du point M, la quantité:

$$\text{ProxI = 0,5.((1/JT)+(1/JS))}$$

Par analogie avec le cas de la lentille mince, on définit ainsi, dans une direction donnée du regard et pour une proximité objet donnée, i.e. pour un point de l'espace objet sur le rayon lumineux correspondant, une puissance optique, Pui, comme la somme de la proximité image et de la proximité objet :

$$\text{Pui = ProxO + ProxI}$$

Avec les mêmes notations, on définit dans chaque direction du regard et pour une proximité objet donnée, un astigmatisme A comme

$$A = \left| \frac{1}{JT} - \frac{1}{JS} \right|$$

Cette définition correspond à la valeur d'astigmatisme du faisceau de rayons créé par la lentille. L'angle de l'astigmatisme communément appelé axe est l'angle $\gamma$ mesuré dans le repère (Q', $x_m$, $y_m$, $z_m$) lié à l'oeil, par rapport à la direction $z_m$, avec lequel se forme l'image S ou T en fonction de la convention utilisée, dans le plan (Q', $z_m$, $y_m$).

On définit l'astigmatisme résultant comme étant l'écart entre l'astigmatisme prescrit et l'astigmatisme généré par le verre.

On obtient ainsi des définitions selon l'invention de la puissance optique et de l'astigmatisme de la lentille, dans les conditions du porté, qui peuvent être par exemple calculés comme expliqué dans B. Bourdoncle et autres, Ray tracing through progressive ophthalmic lenses, 1990 International Lens Design Conference, D.T. Moore ed., Proc. Soc. Photo. Opt. Instrum. Eng. Selon un mode de réalisation, on entend par conditions de port standard la position de la lentille par rapport à l'oeil du porteur moyen, définie notamment par un angle pantoscopique de 8°, une distance verre - oeil de 12 mm, un galbe de 0°. On pourrait aussi utiliser d'autres conditions. On peut ainsi calculer les paramètres à l'aide d'un programme de tracé de rayons, pour une lentille donnée. Selon l'invention, la puissance optique et l'astigmatisme peuvent être calculés de telle sorte que la prescription est atteinte au niveau du point de contrôle P soit pour un porteur portant ses verres dans les conditions du porté soit telle que mesurée par un frontofocomètre.

La figure 3 montre la position de l'oeil et du repère qui y est lié dans une direction ($\alpha$, $\beta$). On a représenté sur la figure 3 un repère {x, y, z} fixe et un repère {$x_m$, $y_m$, $z_m$} lié à l'oeil, pour bien montrer la rotation de l'oeil. Le repère {x, y, z} a pour origine le point Q' ; l'axe x est l'axe Q'F' -le point F' n'étant pas représenté sur la figure 3 et passe par le point O ; cet axe est orienté de la lentille vers l'oeil. Le plan {y, z} est le plan vertical ; l'axe y est vertical et orienté vers le haut ; l'axe z est horizontal, le repère étant orthonormé direct. Le repère {$x_m$, $y_m$, $z_m$} lié à l'oeil a comme centre le point Q' ; l'axe $x_m$ est donné par la direction JQ' du regard, et coïncide avec le repère {x, y, z} pour la direction primaire du regard.

Le point P est positionné sur la figure 3 suivant ses coordonnées angulaires $\alpha_p$, $\beta_p$. On a représenté sur la figure 3 la zone supérieure 11 définie par des valeurs d'abaissement de regard $\alpha$, du porteur comprises entre $\alpha_p$-30° et $\alpha_p$, le long d'un parcours d'abaissement de regard et par des valeurs de déplacement latéral $\beta$, de regard du porteur comprises entre $\beta_p$-30° et $\beta_p$+30°, parallèlement à un axe de déplacement latéral du regard ainsi que la zone inférieure 12 définie par des valeurs d'abaissement de regard $\alpha$, du porteur comprises entre $\alpha_p$ et $\alpha_p$+30°, le long d'un parcours d'abaissement de regard et par des valeurs de déplacement latéral $\beta$, de regard du porteur comprises entre $\beta_p$-30° et $\beta_p$+30°, parallèlement à un axe de déplacement latéral du regard.

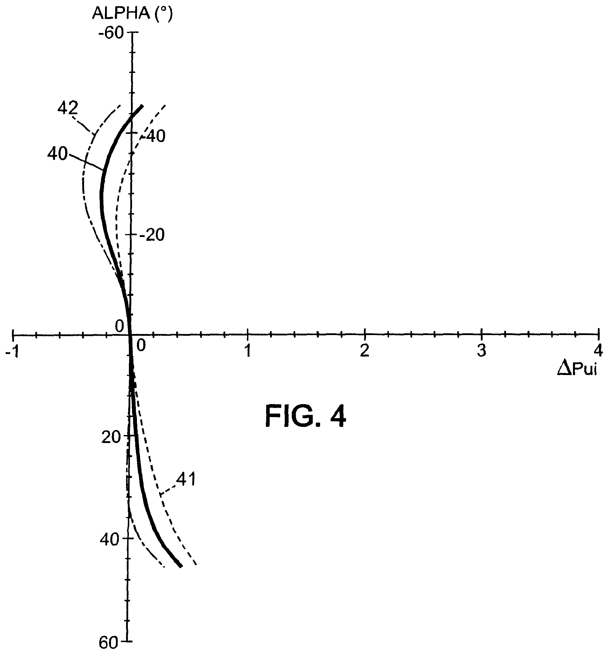

La lentille est décrite dans la suite en référence à différents modes de réalisation. Un premier mode de réalisation de l'invention, noté EX1, est décrit en référence aux figures 4 à 6.

Selon cet exemple, la prescription du porteur en vision de loin est de - 6 Dioptries. Les cartes représentées correspondent à des analyses optiques du verre placé devant l'oeil du porteur dans des conditions de port standard précédemment définies et pour des points objets à l'infini (ProxO=0).

Dans ces exemples, la lentille est montée comme une lentille unifocale standard et le point P est positionné en face de la pupille du porteur.

La fonction optique de la lentille est sensiblement symétrique par rapport à la ligne d'abaissement du regard. Dans cet exemple, la ligne d'abaissement de regard est verticale. Ceci permet d'utiliser la même lentille pour l'oeil droit et pour l'oeil gauche. La lentille peut être montée dans la monture en gardant l'axe de symétrie vertical. Il reste possible de prévoir un montage avec une ligne d'abaissement du regard inclinée.

Un point de centrage peut être utilisé par les opticiens pour positionner la lentille dans la monture et peut être défini de l'une des façons suivantes : le point situé sur la lentille au milieu des deux gravures ; le point matérialisé sur la lentille, avant montage dans la monture, par une croix ou toute autre marque telle qu'un point entouré d'un cercle tracé sur la lentille. Comme expliqué plus bas, ce point est avantageusement utilisé pour le montage de la lentille dans la monture.

Selon les modes de réalisation, le point de centrage peut être confondu avec le point P, ou en être distant, en fonction du type de montage du verre choisi. Dans les différents modes de réalisations présentés, le point P est confondu avec le point de centrage.

La figure 4 montre un diagramme des variations de puissances minimale 42 (trait mixte fin), maximale 41 (trait interrompu fin) et moyenne 40 (trait continu fort) en dioptries (en abscisse), en fonction de l'abaissement de regard alpha en degrés (en ordonnée), suivant la méridienne (ou parcours d'abaissement de regard) de la lentille, selon le premier mode de réalisation de l'invention. Les valeurs sont normalisées à l'origine, où la puissance moyenne vaut -6 dioptries, soit la prescription du porteur considéré dans l'analyse.

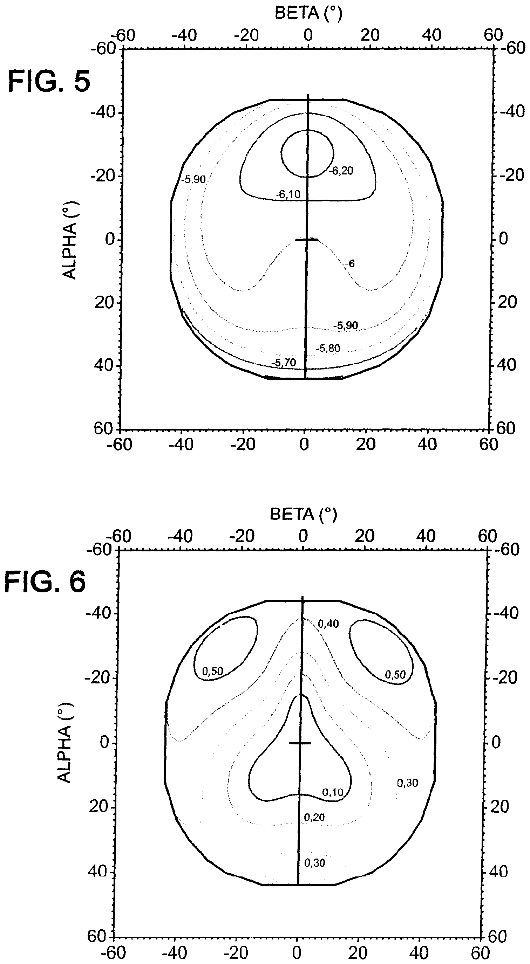

La figure 5 montre une carte de puissance moyenne de la lentille de la figure 4 ; comme cela est habituel, on a porté à la figure 5, les lignes d'isopuissance ; ces lignes sont formées des points présentant une même valeur de la puissance moyenne. A la figure 5 sont représentées les lignes d'isopuissance distantes de 0,10 dioptrie.

La figure 6 montre une carte d'astigmatisme résultant (comme défini précédemment dans le texte) de la lentille de la figure 4. Sont représentées à la figure 6 les lignes d'iso astigmatisme résultant distantes de 0,10 dioptrie. Ces lignes sont symétriques par rapport à l'axe vertical de la lentille.

La lentille des figures 4 à 6 est montée de la façon suivante. On mesure de façon connue en soi la position dans la monture de la pupille du porteur en vision de loin, en hauteur et en demi-écart pupillaire. La lentille est ensuite montée dans la monture de sorte que le point de centrage de la lentille se trouve à la position mesurée tout en s'assurant de l'horizontalité de la délimitation des zones supérieure et inférieure. Dans la partie supérieure du verre, la variation de puissance moyenne fournie au porteur par rapport à sa prescription atteint environ -0,28 dioptrie ($\Delta Pui_{SupMax}$) et dans la partie inférieure du verre, cette variation de puissance moyenne atteint environ 0,12 ($\Delta Pui_{InfMax}$) dioptrie. Le porteur a donc dans la zone supérieure une compensation légèrement plus négative que celle prescrite et dans la zone inférieure une compensation légèrement moins négative que celle prescrite.

Les inventeurs ont pu constater qu'il en résulte une netteté et un confort de vision améliorés.

Les autres figures illustrent d'autres modes de réalisation selon l'invention, notés EX2 à EX5.

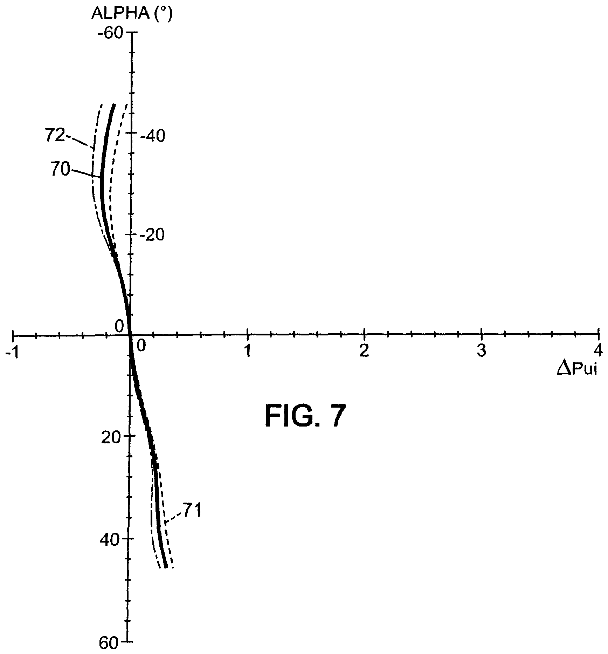

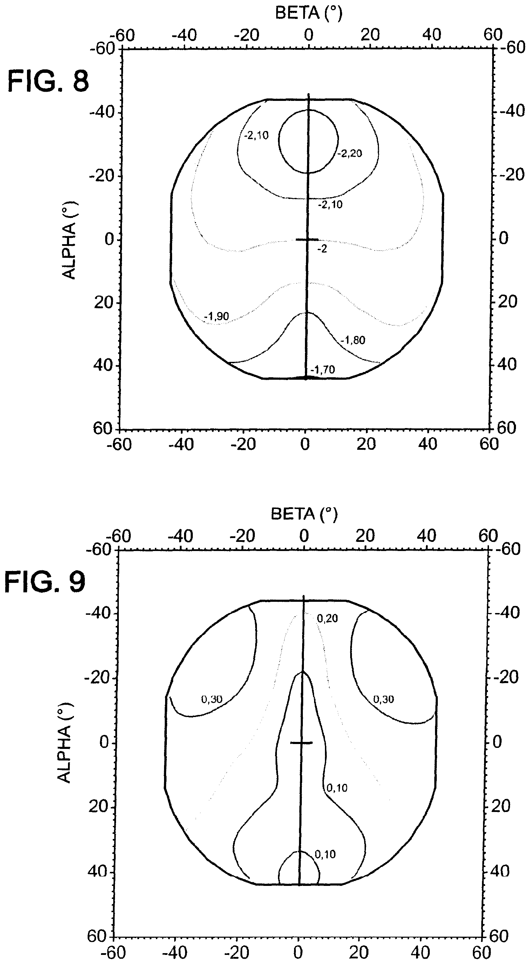

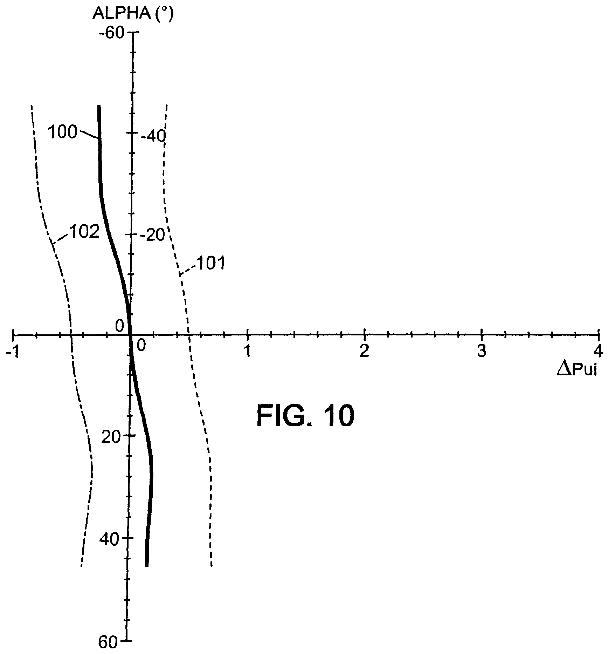

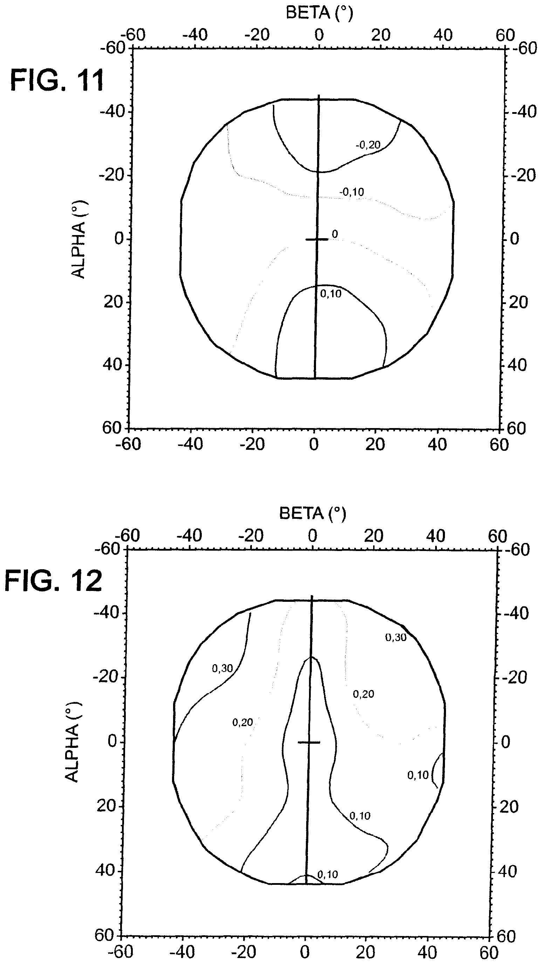

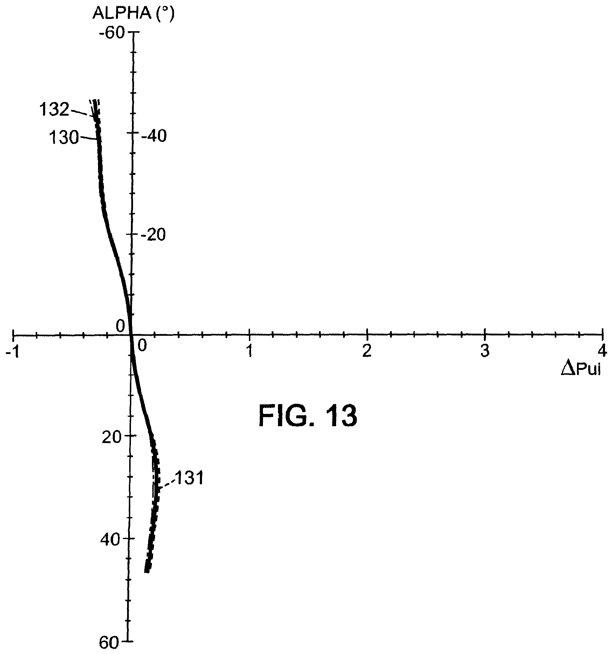

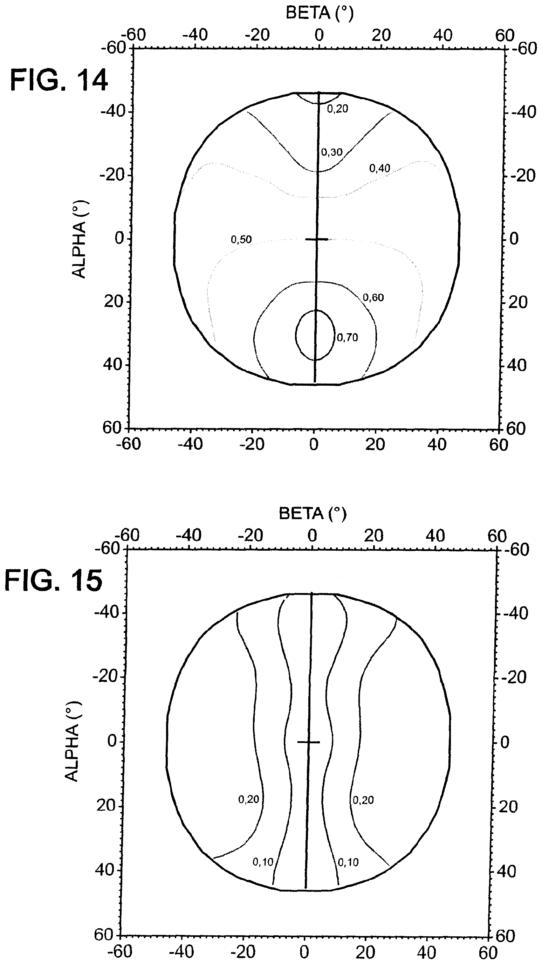

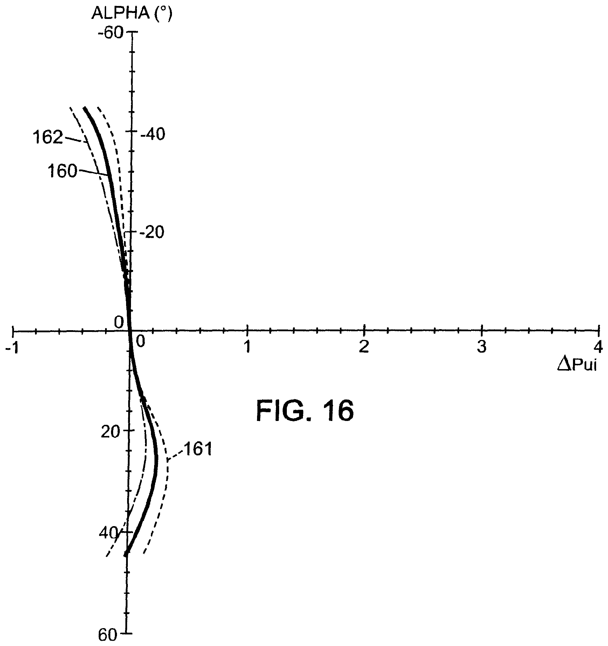

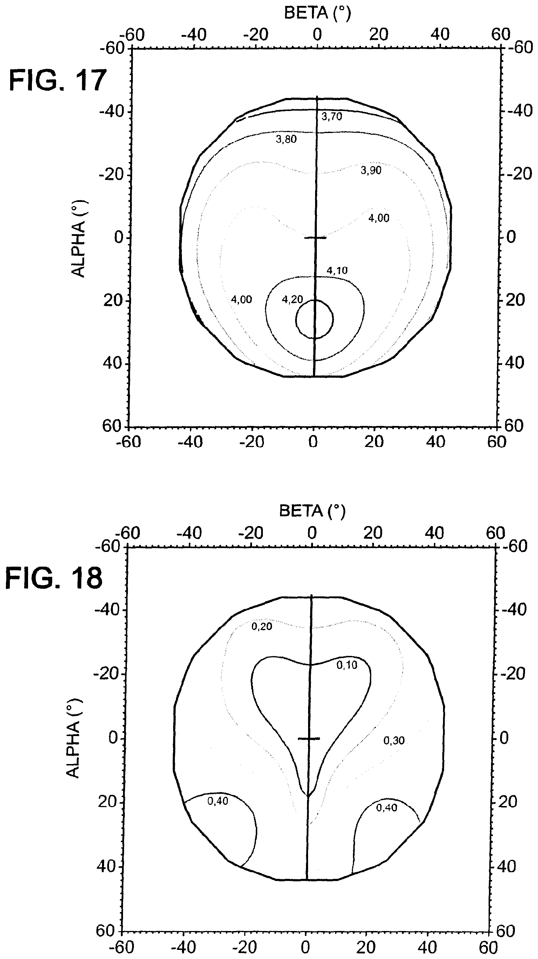

Les figures correspondant à ces différents modes de réalisation EX2 (figures 7 à 9), EX3 (figures 10 à 12), EX4 (figures 13 à 15), EX5 (figures 16 à 18) représentent les caractéristiques de chacune de ces lentilles selon le même mode de représentation que celui adopté et décrit ci-dessus pour EX1 (figures 4 à 6), respectivement pour des prescriptions en vision de loin de -2 dioptries; +0,50 (-1,00)30° dioptrie ; +0,50 dioptrie ; +4 dioptries.

TABLEAU I

| | EX1 | EX2 | EX3 | EX4 | EX5 |
|---|---|---|---|---|---|
| Figures | 4 à 6 | 7 à 9 | 10 à 12 | 13 à 15 | 16 à 18 |

(suite)

| | EX1 | EX2 | EX3 | EX4 | EX5 |
|---|---|---|---|---|---|
| Puissance moyenne à l'origine (en dioptrie) | - 6 | - 2 | 0 | + 0,5 | + 4 |
| Variation de la puissance moyenne le long du parcours d'abaissement de regard | Courbe 40 | Courbe 70 | Courbe 100 | Courbe 130 | Courbe 160 |
| Variation des puissances minimale et maximale | Courbes 41, 42 | Courbes 71, 72 | Courbes 101, 102 | Courbes 131, 132 | Courbes 161, 162 |
| Maximum de variation de puissance moyenne dans la zone supérieure, $\Delta Pui_{SupMax}$ (en dioptrie) | - 0,28 | - 0,25 | - 0,28 | - 0,26 | - 0,18 |
| Maximum de variation de puissance moyenne dans la zone inférieure, $\Delta Pui_{InfMax}$ (en dioptrie) | 0,12 | 0,22 | 0,20 | 0,24 | 0,24 |
| Variation totale de puissance moyenne, $\Delta Pui_{total}$ (en dioptrie) | 0,40 | 0,47 | 0,48 | 0,50 | 0,42 |
| Gradient max de puissance moyenne le long du parcours d'abaissement de regard / $\Delta Pui_{total}$ (en degré$^{-1}$) | $3,85.10^{-2}$ | $2,53.10^{-2}$ | $2,73.10^{-2}$ | $2,58.10^{-2}$ | $2,98.10^{-2}$ |
| Astigmatisme résultant maximum/ $\Delta Pui_{total}$ (en dioptrie) | 1,35 | 0,81 | 0,69 | 0,5 | 1,02 |

Le tableau I ci-dessus, résume les différentes caractéristiques relatives aux modes de réalisation exemplifiés.

La lentille des exemples décrits plus haut peut être obtenue par optimisation d'une surface suivant des méthodes d'optimisations connues en soi. On peut citer à titre d'exemple la méthode d'optimisation, relative aux lentilles multifocales progressives, décrite dans le document EP1752815 « *method of manufacturing an optical system* ». On peut utiliser pour l'optimisation un ou plusieurs des critères exposés dans la description qui précède en référence aux figures 4 à 18, et notamment :

-    une variation de puissance moyenne dont le maximum est compris entre -0,1 et -0,4 dioptrie dans la zone supérieure ;

-    une variation de puissance moyenne dont le maximum est compris entre +0,1 et +0,4 dioptrie dans la zone inférieure ;

-    une prescription pour le porteur.

Ces critères peuvent être combinés à d'autres, notamment à un ou plusieurs des critères proposés dans les exemples précédents.

Le choix de certains ou de tous ces critères permet d'obtenir, par optimisation, une lentille. L'homme du métier comprend aisément que la lentille en cause ne présente pas nécessairement des valeurs correspondant exactement aux critères imposés.

Dans les exemples de réalisation ci-dessus, on a optimisé une seule des faces des lentilles. Il est clair que dans tous ces exemples, on peut échanger facilement le rôle des surfaces avant et arrière. On peut aussi répartir indifféremment la variation de puissance sur l'une ou l'autre des deux surfaces de la lentille, ou partiellement sur une face et l'autre. La lentille peut être optimisée sur une face en prenant en compte des grandeurs surfaciques, ou encore par tracé de rayon, sur deux faces en prenant en compte des grandeurs optiques.

## Revendications

1.    Méthode de calcul mise en oeuvre par des moyens informatiques du système optique (OS) d'une lentille ophtalmique, destinée à être portée dans une monture de lunettes, personnalisée pour un porteur donné ayant une prescription unifocale, la méthode de calcul comprenant les étapes suivantes :

    - fournir la prescription en puissance du porteur ;

- définir une distance entre le centre de rotation de l'oeil (CRO) et la face arrière de la lentille ophtalmique, selon une ligne de regard $(\alpha, \beta)$ du porteur;
- définir un angle pantoscopique;
- définir un galbe ;
- définir un point P de contrôle de la prescription correspondant à un abaissement de regard $\alpha_P$ compris entre -10° et +25° et un déplacement latéral de regard $\beta_P$ compris entre -10° et +10° où la puissance du verre au point P est égale à la prescription du porteur ;
- définir une zone supérieure (11) définie par des valeurs, $\alpha$, d'abaissement de regard du porteur (2) comprises entre $\alpha_P$-30° et $\alpha_P$, le long d'un parcours d'abaissement de regard et par des valeurs, $\beta$, de déplacement latéral de regard du porteur (2) comprises entre $\beta_P$-30° et $\beta_P$+30°, parallèlement à un axe de déplacement latéral du regard ; et
- définir une zone inférieure (12) définie par des valeurs, $\alpha$, d'abaissement de regard du porteur (2) comprises entre $\alpha_P$ et $\alpha_P$+30°, le long d'un parcours d'abaissement de regard et par des valeurs, $\beta$, de déplacement latéral de regard du porteur (2) comprises entre $\beta_P$-30° et $\beta_P$+30°, parallèlement à un axe de déplacement latéral du regard ;

et où ladite lentille ophtalmique est calculée de manière à ce que :

- la puissance du verre au point P est sensiblement égale à la prescription du porteur ;
- la zone supérieure présente, par rapport au point P, le long du parcours d'abaissement de regard, une variation continue de puissance moyenne $\Delta Pui_{Sup}$, monotone entre le point P et un point $P_{Sup}$, qui est le point de maximum d'amplitude de variation de la valeur de la puissance, en valeur absolue, et où la valeur de l'écart de puissance moyenne entre les points $P_{Sup}$ et P, $\Delta Pui_{SupMax}$=Pui ($P_{Sup}$) -Pui (P), est comprise entre -0,1 et -0,4 dioptrie ;
- la zone inférieure présente, par rapport au point P, le long du parcours d'abaissement de regard, une variation continue de puissance moyenne $\Delta Pui_{Inf}$, monotone entre le point P et un point $P_{Inf}$, qui est le point de maximum d'amplitude de variation de la valeur de la puissance, en valeur absolue, et où la valeur de l'écart de puissance moyenne entre les points $P_{Inf}$ et P, $\Delta Pui_{InfMax}$=Pui($P_{Inf}$)-Pui(P), est comprise entre +0,1 et +0,4 dioptrie ; et
- le gradient de puissance moyenne le long du parcours d'abaissement de regard est inférieur à $4.10^{-2} \times \Delta Pui_{total}$, où $\Delta Pui_{total} = |\Delta Pui_{SupMax}| + \Delta Pui_{InfMax}$ et ledit gradient de puissance moyenne est exprimé en dioptrie par degré.

2. Méthode de calcul selon la revendication précédente où :

- la distance entre le centre de rotation de l'oeil (CRO) et la face arrière de la lentille ophtalmique, selon une ligne de regard $(\alpha, \beta) = (0,0)$, est égale à 25,5 mm ;
- l'angle pantoscopique est de - 8°; et
- le galbe est de 0°.

3. Procédé de fabrication d'une lentille ophtalmique, destinée à être portée dans une monture de lunettes, personnalisée pour un porteur donné ayant une prescription unifocale, le procédé de fabrication comprenant les étapes suivantes :

- fournir le système optique (OS) d'une lentille ophtalmique personnalisée pour le porteur donné, calculé selon l'une des revendications 1 ou 2;
- approvisionner un produit semi fini adapté à l'usinage d'une lentille ophtalmique; et
- usiner le produit semi fini de manière à réaliser une lentille ophtalmique ayant les caractéristiques du système optique fourni ci-dessus.

4. Procédé de fabrication d'une lentille ophtalmique personnalisée selon la revendication précédente, où la lentille ophtalmique est associée avec des informations permettant de positionner le point de contrôle P sur ladite lentille et de repérer le haut et le bas de ladite lentille, lesdites informations étant par exemple choisies parmi un ou plusieurs éléments de la liste constituée de microgravure, traçage temporaire, carte de montage, catalogue du fabricant et optionnellement des moyens de repérage du côté nasal et/ou temporal de la lentille.

5. Procédé pour augmenter la netteté de la vision et le confort visuel d'un porteur amétrope non-presbyte, grâce à une prise en compte de la dynamique accommodative de l'oeil, où une lentille ophtalmique, destinée à être portée dans une monture de lunettes, est fournie audit porteur et personnalisée, ladite lentille ophtalmique (1), lorsqu'elle est portée dans une monture de lunettes par un porteur donné (2) de référence défini par les paramètres suivants :

- distance entre le centre de rotation de l'oeil (CRO) et la face arrière de la lentille ophtalmique, selon une ligne de regard $(\alpha, \beta) = (0,0)$, égale à 25,5 mm ;
- angle pantoscopique de - 8°; et
- galbe de 0°,

correspondant à une prescription unifocale pour le porteur, et comprenant :

- un point P de contrôle de la prescription correspondant à un abaissement de regard $\alpha_P$ compris entre -10° et +25° et un déplacement latéral de regard $\beta_P$ compris entre -10° et +10° ;
- une zone supérieure (11) définie par des valeurs, $\alpha$, d'abaissement de regard du porteur (2) comprises entre $\alpha_P$-30° et $\alpha_P$, le long d'un parcours d'abaissement de regard et par des valeurs, $\beta$, de déplacement latéral de regard du porteur (2) comprises entre $\beta_P$-30° et $\beta_P$+30°, parallèlement à un axe de déplacement latéral du regard ; et
- une zone inférieure (12) définie par des valeurs, $\alpha$, d'abaissement de regard du porteur (2) comprises entre $\alpha_P$ et $\alpha_P$+30°, le long d'un parcours d'abaissement de regard et par des valeurs, $\beta$, de déplacement latéral de regard du porteur (2) comprises entre $\beta_P$-30° et $\beta_P$+30°, parallèlement à un axe de déplacement latéral du regard ;

la lentille ophtalmique étant associée à des informations permettant de positionner le point de contrôle P sur ladite lentille et de repérer le haut et le bas de ladite lentille, lesdites informations étant par exemple choisies parmi un ou plusieurs éléments de la liste constituée de microgravure, traçage temporaire, carte de montage, catalogue fabricant et optionnellement des moyens de repérage du côté nasal et/ou temporal de la lentille, et dans laquelle :

- la puissance du verre au point P est sensiblement égale à la prescription du porteur ;
- la zone supérieure présente, par rapport au point P, le long du parcours d'abaissement de regard, une variation continue de puissance moyenne $\Delta Pui_{Sup}$, monotone entre le point P et un point $P_{Sup}$, qui est le point de maximum d'amplitude de variation de la valeur de la puissance, en valeur absolue, et où la valeur de l'écart de puissance moyenne entre les points $P_{Sup}$ et P, $\Delta Pui_{SupMax}$=Pui $(P_{Sup})$ -Pui (P), est comprise entre -0, 1 et -0,4 dioptrie ;
- la zone inférieure présente, par rapport au point P, le long du parcours d'abaissement de regard, une variation continue de puissance moyenne $\Delta Pui_{Inf}$, monotone entre le point P et un point $P_{Inf}$, qui est le point de maximum d'amplitude de variation de la valeur de la puissance, en valeur absolue, et où la valeur de l'écart de puissance moyenne entre les points $P_{Inf}$ et P, $\Delta Pui_{InfMax}$=Pui$(P_{Inf})$-Pui(P), est comprise entre +0,1 et +0,4 dioptrie ; et
- le gradient de puissance moyenne le long du parcours d'abaissement de regard est inférieur à $4.10^{-2} \times \Delta Pui_{total}$, où $\Delta Pui_{total} = | \Delta Pui_{SupMax}| + \Delta Pui_{InfMax}$ et ledit gradient de puissance moyenne est exprimé en dioptrie par degré, ou ladite lentille ophtalmique (1) étant fabriquée selon l'une quelconque des revendications 3 ou 4.

6. Procédé selon la revendication 5, **caractérisé en ce que** la valeur de maximum de variation de puissance $|\Delta Pui_{SupMax}|$ et/ou la valeur de $\Delta Pui_{InfMax}$ est supérieure ou égale à 0,15 dioptrie et inférieure ou égale à 0,30 dioptrie.

7. Procédé selon la revendication 5 ou 6, **caractérisé en ce que** la valeur de maximum de variation de puissance $|\Delta Pui_{SupMax}|$, est supérieure ou égale à $0.5 \times \Delta Pui_{InfMax}$ et/ou inférieure ou égale à $2 \times \Delta Pui_{InfMax}$.

8. Procédé selon l'une quelconque des revendications 5 à 7, **caractérisé en ce que** l'astigmatisme résultant est inférieur ou égal à $1,25 \times \Delta Pui_{total}$, exprimé en dioptrie, sur l'ensemble des zones supérieure (11) et inférieure (12).

9. Procédé selon la revendication 8, **caractérisé en ce que** l'astigmatisme résultant est inférieur ou égal à $0,9 \times \Delta Pui_{total}$, exprimé en dioptrie, pour l'ensemble des zones supérieure (11) et inférieure (12).

10. Procédé selon l'une quelconque des revendications 5 à 9, **caractérisé en ce que** le gradient de puissance moyenne le long du parcours d'abaissement du regard est inférieur ou égal à $3.10^{-2} \times \Delta Pui_{total}$, exprimé en dioptrie par degré.

11. Procédé selon l'une quelconque des revendications 5 à 10, **caractérisé en ce que** les valeurs de variation de puissance moyenne $\Delta Pui_{Inf}$ et $\Delta Pui_{Sup}$ sont égales en valeur absolue, et/ou **en ce que** les points $P_{Sup}$ et $P_{Inf}$ sont symétriques par rapport à P.

12. Procédé selon l'une quelconque des revendications 5 à 11, **caractérisé en ce que** la surface avant et/ou la surface arrière est choisie dans la liste constituée d'une surface sphérique, d'une surface asphérique, d'une surface complexe.

**Patentansprüche**

1. Berechnungsmethode, die von Informatikmitteln umgesetzt wird, des optischen Systems (OS) einer ophthalmischen Linse, die dazu bestimmt ist, in einem Brillengestell getragen zu werden, die für einen bestimmten Träger mit einer unifokalen Verschreibung personalisiert wird, wobei die Berechnungsmethode die folgenden Schritte aufweist:

   - Bereitstellen der Verschreibungsstärke des Trägers,
   - Definieren eines Abstands zwischen dem Rotationszentrum des Auges (CRO) und der Rückseite der ophthalmischen Linse nach einer Sichtlinie ($\alpha$, $\beta$) des Trägers,
   - Definieren eines pantoskopischen Winkels,
   - Definieren einer Rundung,
   - Definieren eines Punktes P zur Kontrolle der Verschreibung, der einem Senken des Blicks $\alpha_P$ zwischen -10° und +25° und einem seitlichen Verschieben des Blicks $\beta_P$ zwischen -10° und +10° entspricht, wobei die Stärke des Glases an dem Punkt P gleich der Verschreibung des Trägers ist,
   - Definieren eines oberen Bereichs (11), der durch Werte $\alpha$ des Senkens des Blicks des Trägers (2), die zwischen $\alpha_P$-30° und $\alpha_P$ betragen, entlang einer Strecke des Senkens des Blicks und durch Werte $\beta$ des seitlichen Verschiebens des Blicks des Trägers (2), die zwischen $\beta_P$-30° und $\beta_P$+30° betragen, parallel zu einer Achse des seitlichen Verschiebens des Blicks definiert wird, und
   - Definieren eines unteren Bereichs (12), der durch Werte $\alpha$ des Senkens des Blicks des Trägers (2), die zwischen $\alpha_P$ und $\alpha_P$+30° betragen, entlang einer Strecke des Senkens des Blicks und durch Werte $\beta$ des seitlichen Verschiebens des Blicks des Trägers (2), die zwischen $\beta_P$-30° und $\beta_P$+30° betragen, parallel zu einer Achse des seitlichen Verschiebens des Blicks definiert wird;

   und wobei die ophthalmische Linse derart berechnet wird, dass:

   - die Stärke des Glases an dem Punkt P im Wesentlichen gleich der Verschreibung des Trägers ist,
   - der obere Bereich in Bezug auf den Punkt P entlang der Strecke des Senkens des Blicks eine kontinuierliche Variation der durchschnittlichen Stärke $\Delta Pui_{Sup}$ aufweist, die zwischen dem Punkt P und einem Punkt $P_{Sup}$ monoton ist, die der Punkt des Amplitudenmaximums der Variation des Wertes der Stärke als Absolutwert ist, und wobei der Wert der Differenz der durchschnittlichen Stärke zwischen den Punkten $P_{Sup}$ und P, $\Delta Pui_{SupMax}$ = Pui($P_{Sup}$) - Pui(P), zwischen -0, 1 und -0,4 Dioptrien beträgt,
   - der untere Bereich in Bezug auf den Punkt P entlang der Strecke des Senkens des Blicks eine kontinuierliche Variation der durchschnittlichen Stärke $\Delta Pui_{Inf}$ aufweist, die zwischen dem Punkt P und einem Punkt $P_{Inf}$ monoton ist, die der Punkt des Amplitudenmaximums der Variation des Wertes der Stärke als Absolutwert ist, und wobei der Wert der Differenz der durchschnittlichen Stärke zwischen den Punkten $P_{Inf}$ und P, $\Delta Pui_{InfMax}$ = Pui ($P_{Inf}$) - Pui(P), zwischen +0,1 und +0,4 Dioptrien beträgt,
   - der Gradient der durchschnittlichen Stärke entlang der Strecke des Senkens des Blicks niedriger ist als $4.10^{-2} \times \Delta Pui_{total}$ wobei $\Delta Pui_{total}$ = $|\Delta Pui_{SupMax}|+\Delta Pui_{InfMax}$ und der Gradient der durchschnittlichen Stärke in Dioptrien pro Grad ausgedrückt wird.

2. Berechnungsmethode nach dem vorhergehenden Anspruch, wobei:

   - der Abstand zwischen dem Rotationszentrum des Auges (CRO) und der Rückseite der ophthalmischen Linse nach einer Sichtlinie ($\alpha$, $\beta$) = (0, 0) gleich 25,5 mm ist,
   - der pantoskopische Winkel -8° beträgt und
   - die Rundung 0° beträgt.

3. Verfahren zur Herstellung einer ophthalmischen Linse, die dazu bestimmt ist, in einem Brillengestell getragen zu werden, und die für einen bestimmten Träger mit einer unifokalen Verschreibung personalisiert ist, wobei das Herstellungsverfahren die folgenden Schritte aufweist:

   - Bereitstellen des optischen Systems (OS) einer ophthalmischen Linse, die für einen bestimmten Träger personalisiert wird, das nach einem der Ansprüche 1 oder 2 berechnet wird,
   - Beschaffen eines halbfertigen Produktes, das zur Bearbeitung einer ophthalmischen Linse geeignet ist, und
   - Bearbeiten des halbfertigen Produktes, um eine ophthalmische Linse herzustellen, die die Eigenschaften des oben bereitgestellten optischen Systems aufweist.

4. Verfahren zur Herstellung einer personalisierten ophthalmischen Linse nach dem vorhergehenden Anspruch, wobei die ophthalmische Linse mit Informationen verbunden wird, die ermöglichen, den Kontrollpunkt P auf der Linse anzuordnen und den oberen und den unteren Teil der Linse zu markieren, wobei die Informationen beispielsweise aus einem oder mehreren Elementen der Liste, die aus Mikrogravierung, vorübergehendem Aufzeichnen, Montagekarte, Herstellerkatalog und optional den Markierungsmitteln der Nasenseite und/oder Schläfenseite der Linse besteht, ausgewählt werden.

5. Verfahren zur Erhöhung der Sehschärfe und des Sehkomforts eines fehlsichtigen, nicht weitsichtigen Trägers dank eines Berücksichtigens der Akkommodationsdynamik des Auges, wobei eine ophthalmische Linse, die dazu bestimmt ist, in einem Brillengestell getragen zu werden, dem Träger bereitgestellt wird und personalisiert wird, wobei die ophthalmische Linse (1), wenn sie in einem Brillengestell von einem bestimmten Referenzträger (2) getragen wird, der durch die folgenden Parameter definiert wird:

- Abstand zwischen dem Rotationszentrum des Auges (CRO) und der Rückseite der ophthalmischen Linse nach einer Sichtlinie $(\alpha, \beta) = (0, 0)$, der gleich 25,5 mm ist,
- pantoskopischer Winkel von -8° und
- Rundung von 0°,

einer unifokalen Verschreibung für den Träger entspricht und Folgendes aufweist:

- einen Punkt P zur Kontrolle der Verschreibung, der einem Senken des Blicks $\alpha_P$ zwischen -10° und +25° und einem seitlichen Verschieben des Blicks $\beta_P$ zwischen -10° und +10° entspricht,
- einen oberen Bereich (11), der durch Werte $\alpha$ des Senkens des Blicks des Trägers (2), die zwischen $\alpha_P$-30° und $\alpha_P$ betragen, entlang einer Strecke des Senkens des Blicks und durch Werte $\beta$ des seitlichen Verschiebens des Blicks des Trägers (2), die zwischen $\beta_P$-30° und $\beta_P$+30° betragen, parallel zu einer Achse des seitlichen Verschiebens des Blicks definiert wird, und
- einen unteren Bereich (12), der durch Werte $\alpha$ des Senkens des Blicks des Trägers (2), die zwischen $\alpha_P$ und $\alpha_P$+30° betragen, entlang einer Strecke des Senkens des Blicks und durch Werte $\beta$ des seitlichen Verschiebens des Blicks des Trägers (2), die zwischen $\beta_P$-30° und $\beta_P$+30° betragen, parallel zu einer Achse des seitlichen Verschiebens des Blicks definiert wird,

wobei die ophthalmische Linse mit Informationen verbunden wird, die ermöglichen, den Kontrollpunkt P auf der Linse anzuordnen und den oberen und den unteren Teil der Linse zu markieren, wobei die Informationen beispielsweise aus einem oder mehreren Elementen der Liste, die aus Mikrogravierung, vorübergehendem Aufzeichnen, Montagekarte, Herstellerkatalog und optional den Markierungsmitteln der Nasenseite und/oder Schläfenseite der Linse besteht, ausgewählt werden, und wobei:

- die Stärke des Glases an dem Punkt P im Wesentlichen gleich der Verschreibung des Trägers ist,
- der obere Bereich in Bezug auf den Punkt P entlang der Strecke des Senkens des Blicks eine kontinuierliche Variation der durchschnittlichen Stärke $\Delta Pui_{Sup}$ aufweist, die zwischen dem Punkt P und einem Punkt $P_{Sup}$ monoton ist, die der Punkt des Amplitudenmaximums der Variation des Wertes der Stärke als Absolutwert ist, und wobei der Wert der Differenz der durchschnittlichen Stärke zwischen den Punkten $P_{Sup}$ und P, $\Delta Pui_{SupMax}$ = Pui($P_{Sup}$) - Pui(P), zwischen -0,1 und -0,4 Dioptrien beträgt,
- der untere Bereich in Bezug auf den Punkt P entlang der Strecke des Senkens des Blicks eine kontinuierliche Variation der durchschnittlichen Stärke $\Delta Pui_{Inf}$ aufweist, die zwischen dem Punkt P und einem Punkt $P_{Inf}$ monoton ist, die der Punkt des Amplitudenmaximums der Variation des Wertes der Stärke als Absolutwert ist, und wobei der Wert der Differenz der durchschnittlichen Stärke zwischen den Punkten $P_{Inf}$ und P, $\Delta Pui_{InfMax}$ = Pui($P_{Inf}$) - Pui(P), zwischen +0,1 und +0,4 Dioptrien beträgt, und
- der Gradient der durchschnittlichen Stärke entlang der Strecke des Senkens des Blicks niedriger ist als $4.10^{-2} \times \Delta Pui_{total}$, wobei $\Delta Pui_{total} = |\Delta Pui_{SupMax}| + \Delta Pui_{InfMax}$ und der Gradient der durchschnittlichen Stärke in Dioptrien pro Grad ausgedrückt wird,

wobei die ophthalmische Linse (1) nach einem der Ansprüche 3 oder 4 hergestellt wird.

6. Verfahren nach Anspruch 5, **dadurch gekennzeichnet, dass** der Maximalwert der Variation der Stärke $|\Delta Pui_{SupMax}|$ und/oder der Wert von $\Delta Pui_{InfMax}$ größer als oder gleich 0,15 Dioptrien und kleiner als oder gleich 0,30 Dioptrien ist.

7. Verfahren nach Anspruch 5 oder 6, **dadurch gekennzeichnet, dass** der Maximalwert der Variation der Stärke

$|\Delta Pui_{SupMax}|$ größer als oder gleich $0{,}5\mathrm{x}\Delta Pui_{InfMax}$ und/oder niedriger als oder gleich $2\times\Delta Pui_{InfMax}$ ist.

8. Verfahren nach einem der Ansprüche 5 bis 7, **dadurch gekennzeichnet, dass** der resultierende Astigmatismus niedriger als oder gleich $1{,}25 \times \Delta Pui_{total}$ , ausgedrückt in Dioptrien, auf der Gesamtheit des oberen (11) und unteren (12) Bereichs ist.

9. Verfahren nach Anspruch 8, **dadurch gekennzeichnet, dass** der resultierende Astigmatismus niedriger als oder gleich $0{,}9 \times \Delta Pui_{total}$, ausgedrückt in Dioptrien, für die Gesamtheit des oberen (11) und unteren (12) Bereichs ist.

10. Verfahren nach einem der Ansprüche 5 bis 9, **dadurch gekennzeichnet, dass** der Gradient der durchschnittlichen Stärke entlang der Strecke des Senkens des Blicks niedriger als oder gleich $3{.}10^{-2}\times\Delta Pui_{total}$, ausgedrückt in Dioptrien pro Grad, ist.

11. Verfahren nach einem der Ansprüche 5 bis 10, **dadurch gekennzeichnet, dass** die Werte der Variation der durchschnittlichen Stärke $\Delta Pui_{Inf}$ und $\Delta Pui_{Sup}$ als absoluter Wert gleich sind und/oder dass die Punkte $P_{Sup}$ und $P_{Inf}$ in Bezug auf P symmetrisch sind.

12. Verfahren nach einem der Ansprüche 5 bis 11, **dadurch gekennzeichnet, dass** die vordere Fläche und/oder die hintere Fläche aus der Liste ausgewählt wird, die aus einer sphärischen Fläche, einer asphärischen Fläche, einer komplexen Fläche besteht.

## Claims

1. Computing method implemented by computational means of the optical system (OS) of an ophthalmic lens intended to be worn in a spectacle frame that is personalized for a given wearer having a unifocal prescription, the computing method comprising the following steps:

   - providing the power prescription of the wearer;
   - defining a distance between the eye rotation centre (ERC) and the back face of the ophthalmic lens, along a fixation axis $(\alpha, \beta)$ of the wearer;
   - defining a pantoscopic angle;
   - defining a wrap;
   - defining a reference point P of the prescription corresponding to a lowering $\alpha_P$ of the gaze comprised between -10° and +25° and a lateral gaze movement $\beta_P$ comprised between -10° and +10°, the power of the lens at the point P being equal to the prescription of the wearer;
   - defining an upper zone (11) defined by values $\alpha$ of the lowering of the gaze of the wearer (2), along a gaze-lowering path, comprised between $\alpha_P$-30° and $\alpha_P$, and by values $\beta$ of the lateral gaze movement of the wearer (2), parallelly to an axis of lateral movement of the gaze, comprised between $\beta_P$-30° and $\beta_P$+30°; and
   - defining a lower zone (12) defined by values $\alpha$ of the lowering of the gaze of the wearer (2), along a gaze-lowering path, comprised between $\alpha_P$ and $\alpha_P$+30°, and by values $\beta$ of the lateral gaze movement of the wearer (2), parallelly to an axis of lateral movement of the gaze, comprised between $\beta_P$-30° and $\beta_P$+30°;

   and wherein said ophthalmic lens is computed so that:

   - the power of the lens at the point P is substantially equal to the prescription of the wearer;
   - in the upper zone, with respect to the point P, the average power $\Delta Pui_{Sup}$ varies, along the gaze-lowering path, continuously and monotonically between the point P and a point $P_{Sup}$ that is the point of maximum amplitude of variation in the value of the power, in absolute value, the value of the difference in average power between the points $P_{Sup}$ and P, $\Delta Pui_{SupMax}=Pui(P_{Sup})$ -Pui(P) being comprised between -0.1 and -0.4 dioptres;
   - in the lower zone, with respect to the point P, the average power $\Delta Pui_{Inf}$ varies, along the gaze-lowering path, continuously and monotonically between the point P and a point $P_{Inf}$ that is the point of maximum amplitude of variation in the value of the power, in absolute value, the value of the difference in average power between the points $P_{Inf}$ and P, $\Delta Pui_{InfMax}=Pui(P_{Inf})$-Pui(P) being comprised between +0.1 and +0.4 dioptres; and
   - the average power gradient along the gaze-lowering path is lower than $4\times10^{-2}\times\Delta Pui_{total}$, where:

$$\Delta Pui_{total} = \left| \Delta Pui_{SupMax} \right| + \Delta Pui_{InfMax}$$

and said average power gradient is expressed in dioptres per degree.

2. Computing method according to the preceding claim, wherein:

- the distance between the eye rotation centre (ERC) and the back face of the ophthalmic lens, along a fixation axis $(\alpha, \beta) = (0,0)$ is equal to 25.5 mm;
- the pantoscopic angle is -8°; and
- the wrap is 0°.

3. Process for manufacturing an ophthalmic lens intended to be worn in a spectacle frame that is personalized for a given wearer having a unifocal prescription, the manufacturing process comprising the following steps:

- providing the optical system (OS) of an ophthalmic lens that is personalized for the given wearer and computed according to one of Claims 1 and 2;
- supplying a semi-finished product suitable for being machined into an ophthalmic lens; and
- machining the semi-finished product so as to produce an ophthalmic lens having the characteristics of the optical system provided beforehand.

4. Process for manufacturing a personalized ophthalmic lens according to the preceding claim, wherein the ophthalmic lens is associated with information allowing the reference point P to be positioned on said lens and the top and bottom of said lens to be located, said information for example being chosen from one or more elements from the following list: a micro-engraving, a temporary mark, a fitting chart, a catalogue of the manufacturer and optionally means for locating the nasal and/or temporal side of the lens.

5. Method for increasing the sharpness of the vision and the visual comfort of a non-presbyopic ametropic wearer, by taking into account the accommodative dynamics of the eye, wherein an ophthalmic lens, intended to be worn in a spectacle frame, is provided to said wearer and personalized,
said ophthalmic lens (1), when it is worn by a given wearer (2) in a reference spectacle frame defined by the following parameters:

- distance between the eye rotation centre (ERC) and the back face of the ophthalmic lens, along a fixation axis $(\alpha, \beta) = (0,0)$ equal to 25.5 mm;
- pantoscopic angle of -8°; and
- wrap of 0°,

corresponding to a unifocal prescription for the wearer, comprising:

- a reference point P of the prescription corresponding to a lowering $\alpha_P$ of the gaze comprised between -10° and +25° and a lateral gaze movement $\beta_P$ comprised between -10° and +10°;
- an upper zone (11) defined by values $\alpha$ of the lowering of the gaze of the wearer (2), along a gaze-lowering path, comprised between $\alpha_P$-30° and $\alpha_P$, and by values $\beta$ of the lateral gaze movement of the wearer (2), parallelly to an axis of lateral movement of the gaze, comprised between $\beta_P$-30° and $\beta_P$+30°; and
- a lower zone (12) defined by values $\alpha$ of the lowering of the gaze of the wearer (2), along a gaze-lowering path, comprised between $\alpha_P$ and $\alpha_P$+30°, and by values $\beta$ of the lateral gaze movement of the wearer (2), parallelly to an axis of lateral movement of the gaze, comprised between $\beta_P$-30° and $\beta_P$+30°;

the ophthalmic lens being associated with information allowing the reference point P to be positioned on said lens and the top and bottom of said lens to be located, said information for example being chosen from one or more elements from the following list: a micro-engraving, a temporary mark, a fitting chart, a catalogue of the manufacturer and optionally means for locating the nasal and/or temporal side of the lens, and wherein:

- the power of the lens at the point P is substantially equal to the prescription of the wearer;
- in the upper zone, with respect to the point P, the average power $\Delta Pui_{Sup}$ varies, along the gaze-lowering path, continuously and monotonically between the point P and a point $P_{Sup}$ that is the point of maximum amplitude of variation in the value of the power, in absolute value, the value of the difference in average power between the points $P_{Sup}$ and P, $\Delta Pui_{SupMax}$=Pui ($P_{Sup}$) - Pui (P) being comprised between -0.1 and -0.4 dioptres;
- in the lower zone, with respect to the point P, the average power $\Delta Pui_{Inf}$ varies, along the gaze-lowering path, continuously and monotonically between the point P and a point $P_{Inf}$ that is the point of maximum amplitude of variation in the value of the power, in absolute value, the value of the difference in average power between the points $P_{Inf}$ and P, $\Delta Pui_{InfMax}$=Pui ($P_{Inf}$) - Pui (P) being comprised between +0.1 and +0.4 dioptres; and
- the average power gradient along the gaze-lowering path is lower than $4\times10^{-2}\times\Delta Pui_{total}$, where:

$$\Delta Pui_{total} = \left|\Delta Pui_{SupMax}\right| + \Delta Pui_{InfMax}$$

and said average power gradient is expressed in dioptres per degree, or said ophthalmic lens (1) being manufactured according to either one of Claims 3 and 4.

6. Method according to Claim 5, **characterized in that** the maximum value of the power variation $|\Delta Pui_{SupMax}|$ I and/or the value of $\Delta Pui_{InfMax}$ is higher than or equal to 0.15 dioptres and lower than or equal to 0.30 dioptres.

7. Method according to Claim 5 or 6, **characterized in that** the maximum value of the power variation $|\Delta Pui_{SupMax}|$ is higher than or equal to $0.5\times\Delta Pui_{InfMax}$ and/or lower than or equal to $2\times\Delta Pui_{InfMax}$.

8. Method according to any one of Claims 5 to 7, **characterized in that** the resulting astigmatism is lower than or equal to $1.25\times\Delta Pui_{total}$, expressed in dioptres, throughout the upper and lower zones (11, 12).

9. Method according to Claim 8, **characterized in that** the resulting astigmatism is lower than or equal to $0.9\times\Delta Pui_{total}$, expressed in dioptres, throughout the upper and lower zones (11, 12).

10. Method according to any one of Claims 5 to 9, **characterized in that** the average power gradient along the gaze-lowering path is lower than or equal to $3\times10^{-2}\times\Delta Pui_{total}$, expressed in dioptres per degree.

11. Method according to any one of Claims 5 to 10, **characterized in that** the values of variation in average power $\Delta Pui_{Inf}$ and $\Delta Pui_{Sup}$ are equal in absolute value, and/or **in that** the points $P_{Sup}$ and $P_{Inf}$ are symmetric with respect to P.

12. Method according to any one of Claims 5 to 11, **characterized in that** the front surface and/or the back surface is chosen from the following list: a spherical surface, an aspherical surface, a complex surface.

FIG. 1

FIG. 2

FIG. 3

FIG. 4

**FIG. 5**

**FIG. 6**

ALPHA (°)

FIG. 7

FIG. 8

FIG. 9

FIG. 10

FIG. 11

FIG. 12

FIG. 13

FIG. 14

FIG. 15

FIG. 16

FIG. 17

FIG. 18

## RÉFÉRENCES CITÉES DANS LA DESCRIPTION

**Documents brevets cités dans la description**

- FR 2871247
- US 6155681 A
- FR 2683642
- EP 0990939 A
- WO 2008132356 A
- EP 1154302 A
- FR 2753805 A
- US 6318859 A
- EP 1752815 A

**Littérature non-brevet citée dans la description**

- **DARRAS C.** *Eléments et réflexions d'optique physiologique,* 1995
- International Lens Design Conference. Proc. Soc. Photo. Opt. Instrum. Eng. Selon. 1990